(19) Europäisches Patentamt

European Patent Office

Office européen des brevets

(11) **EP 0 928 778 B1**

(12) **EUROPEAN PATENT SPECIFICATION**

(45) Date of publication and mention
of the grant of the patent:
**02.04.2003 Bulletin 2003/14**

(51) Int Cl.[7]: **C02F 5/12**, C02F 1/20

(21) Application number: **99100075.3**

(22) Date of filing: **05.01.1999**

(54) **Process for the treatment of boiler water**

Verfahren zur Behandlung von Kesselwasser

Procédé de traitement pour l'eau de chaudières

(84) Designated Contracting States:
**AT BE DE ES FR GB IT NL PT**

(30) Priority: **13.01.1998 JP 476198**

(43) Date of publication of application:
**14.07.1999 Bulletin 1999/28**

(73) Proprietor: **KURITA WATER INDUSTRIES LTD.**
**Shinjuku-ku, Tokyo 160-0023 (JP)**

(72) Inventors:
• **Itoh, Moriyasu**
**Tushima-City, Aichi-pref. 496-0038 (JP)**

• **Taya, Shiro c/o Kurita Water Industries Ltd.**
**Tokyo 160-0023 (JP)**

(74) Representative: **Goddar, Heinz J., Dr.**
**FORRESTER & BOEHMERT**
**Pettenkoferstrasse 20-22**
**80336 München (DE)**

(56) References cited:
**EP-A- 0 516 305**          **EP-A- 0 603 811**
**FR-A- 2 143 877**

**Description**

BACKGROUND OF THE INVENTION

1. Field of the invention

The present invention relates to a process for the treatment of boiler water. More particularly, the present invention relates to a process for the treatment of boiler water which can provide steam having little smell and a small concentration of acetaldehyde and showing high safety although the agent contains a polymer derived from 2-acrylamido-2-methylpropanesulfonic acid.

2. Description of the Related Arts

When scale is formed in a boiler and attached to the surface of a pipe for supplying water disposed in the boiler and to the surrounding area, heat efficiency of the boiler decreases by the adverse effect on the heat conductivity. Moreover, portions to which scale is attached are locally overheated to decrease mechanical strength on the pipe and this occasionally leads to accidents such as swelling and rupture of the pipe. Therefore, various agents for suppressing scale formation and various agents for suppressing scale growth are added to boiler water in order to prevent problems caused by scale.

As the agent for suppressing scale formation or scale growth which does not contain phosphates and does not cause environmental pollution, polymers of a low molecular weight having carboxyl group are widely used. Polyacrylic acid is most widely used for this purpose. Various copolymers have been developed to increase the effect of preventing scale formation.

EP 0 603 811 discloses a boiler water treatment composition, which comprises an oxygen scavenger like succinic acid and a water-soluble polymer acting as a scale inhibitor. It does not disclose the use of the copolymer of (meth)acrylic acid and 2-acrylamido-2-methylpropanesulfonic acid. EP 0 603 811 discloses several copolymers of (meth)acrylic acid including among others copolymers with (meth)acrylamide and acrylamido methyl propane sulfonic acid which are used as scale inhibitor.

For example, in Japanese Patent Application Laid-Open No. Showa 50(1975)-86489, a process comprising adding a copolymer of acrylic acid and 2-acrylamido-2-methylpropanesulfonic acid to suppress precipitation of salts forming scale is proposed.

The above copolymer of acrylic acid and 2-acrylamido-2-methylpropanesulfonic acid exhibits a larger effect of preventing scale formation than polyacrylic acid. However, when boiler water is treated with the copolymer of acrylic acid and 2-acrylamido-2-methylpropanesulfonic acid, amines and acetaldehyde which is suspected to be a carcinogenic substance are formed by heat decomposition of the unit of 2-acrylamido-2-methylpropanesulfonic acid. Amines have low threshold values of smelling and the problem of smell occurs even when amines are present in low concentrations. Thus, an agent for treating boiler water which contains a polymer derived form 2-acrylamido-2-methylpropanesulfonic acid and does not cause the problems of generation of smell and formation of acetaldehyde in steam has been desired.

SUMMARY OF THE INVENTION

The present invention has an object to provide a process for the treatment of boiler water which can provide steam having little smell and a small concentration of acetaldehyde and showing high safety although the agent contains a polymer derived form 2-acrylamido-2-methylpropanesulfonic acid.

As the result of intensive studies by the present inventor to solve the above problems, it was found that, when a copolymer of (meth)acrylic acid and 2-acrylamido-2-methylpropanesulfonic acid is used in combination with an oxygen scavenger, the degree of smell and the small concentration of acetaldehyde can be decreased to the level obtained when polyacrylic acid alone is used. The present invention has been completed on the basis of this knowledge.

Accordingly, the present invention provides:

(1) A process for the treatment of boiler water comprising, adding an agent for treating boiler water comprising a copolymer of (meth)acrylic acid and 2-acrylamido-2-methylpropanesulfonic acid, wherein the copolymer has a molecular weight of 10,000 to 20,000 and wherein the ratio by mole of units of (meth)acrylic acid to units of 2-acrylamido-2-methylpropanesulfonic acid, which are both constituting units of the copolymer, is 70/30 to 90/10, and an oxygen scavenger, to water in a boiler in such an amount, that the concentration of the copolymer of (meth)acrylic acid and 2-acrylamido-2-methylpropanesulfonic acid is 10 to 200 mg/liter.

Preferable embodiments of the present invention include:

(2) A process for the treatment of boiler water as described in (1), further comprising, adding the agent for treating boiler water to water in a boiler in such an amount, that the concentration of the oxygen scavenger is equivalent to or more than the amount of oxygen dissolved in the water supplied to the boiler;
(3) Use of an agent for treating boiler water comprising a copolymer of (meth)acrylic acid and 2-acrylamido-2-methylpropanesulfonic acid, wherein the copolymer has a molecular weight of 10,000 to 20,000 and wherein the ratio by mol of units of (meth)acrylic acid to units of 2-acrylamido-2-methylpropanesulfonic acid, which are both constituting units of the copolymer, is 70/30 to 90/10 and an oxygen scavenger for the treatment of boiler water in a concentration of the copolymer of (meth)acrylic acid and 2-acrylarnido-2-methylpropanesulfonic acid of 10 to 200 mg/liter.

BRIEF DESCRIPTION OF THE DRAWINGS

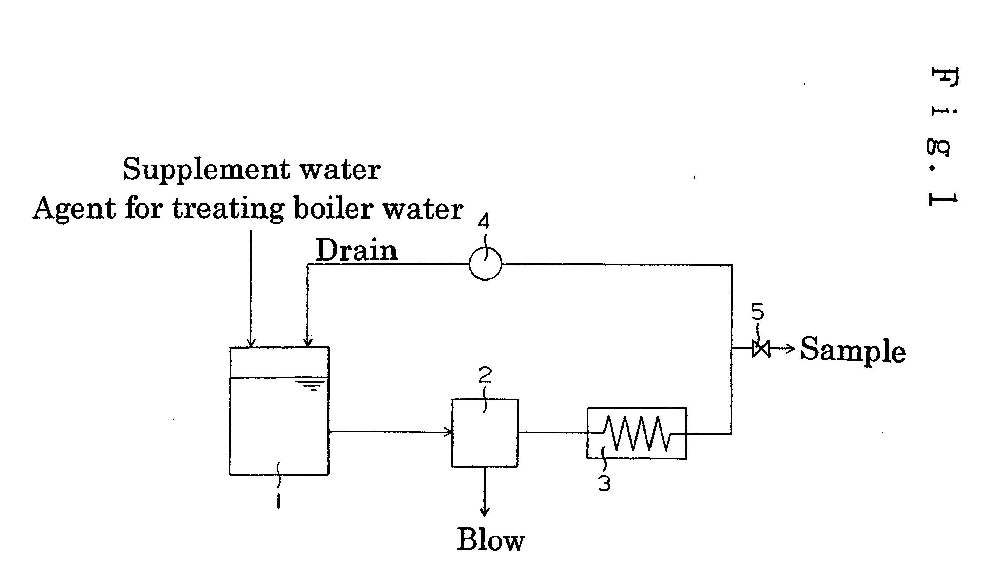

Figure 1 shows a schematic diagram exhibiting a test apparatus used for simulating a boiler system in Examples.

| 1 | A storage tank |
|---|---|
| 2 | A simulated boiler |
| 3 | A heat exchanger |
| 4 | A flow meter |
| 5 | A sampling valve |

DESCRIPTION OF THE PREFERRED EMBODIMENTS

The process for the treatment of boiler water of the present invention comprises adding an agent for treating boiler water comprising a copolymer of (meth)acrylic acid and 2-acrylamido-2-methylpropanesulfonic acid and an oxygen scavenger to water in a boiler. (Meth)acrylic acid means either acrylic acid or methacrylic acid.

In the invention, in the copolymer of (meth) acrylic acid and 2-acrylamido-2-methylpropanesulfonic acid, the ratio by mol of units of (meth)acrylic acid which constitute the copolymer to units of 2-acrylamido-2-methylpropanesulfonic acid which also constitute the copolymer is 70/30 to 90/10 and more preferably 75/25 to 85/15. When the ratio by mol of units of (meth)acrylic acid to units of 2-acrylamido-2-methylpropanesulfonic acid is less than 70/30, there is the possibility that amines and acetaldehyde are formed. When the ratio by mol of units of (meth)acrylic acid to units of 2-acrylamido-2-methylsulfonic acid exceeds 90/10, there is the possibility that the effect of preventing scale formation in a boiler becomes insufficient.

In the present invention, the molecular weight of the copolymer of (meth)acrylic acid and 2-acrylamido-2-methylpropanesulfonic acid further is 10,000 to 20,000 and more preferably 13,000 to 20,000. When the molecular weight of the copolymer is less than 10,000, there is the possibility that amines and acetaldehyde are formed. When the molecular weight of the copolymer exceeds 20,000, there is the possibility that the effect of preventing scale formation in a boiler becomes insufficient.

In the process of the present invention, the agent for treating boiler water is added to water in a boiler in such an amount that the concentration of the copolymer of (meth)acrylic acid and 2-acrylamido-2-methylpropanesulfonic acid is 10 to 200 mg/liter. When the concentration of the copolymer is less than 10 mg/liter, there is the possibility that the effect to prevent scale formation in a boiler becomes insufficient. When the concentration of the copolymer exceeds 200 mg/liter, there is the possibility that amines and acetaldehyde are formed.

The oxygen scavenger used in the agent for treating boiler water of the present invention is not particularly limited. Examples of the oxygen scavenger include a salt of sulfurous acid, a salt of bisulfurous acid, a compound having two carboxyl groups and two or more methylene groups between the two carboxyl groups such as succinic acid, a salt thereof, hydrated hydrazine and hydrazine sulfate. Among these compounds, a salt of sulfurous acid, succinic acid and a salt of succinic acid are preferably used because there is no possibility that these compounds cause smell to steam.

It is preferable that the agent for treating boiler water of the present invention is added to water supplied to a boiler in such an amount that the amount of the oxygen scavenger is equivalent to or more than the amount of oxygen dissolved in the water supplied to a boiler. For example, the reaction of sodium sulfite and oxygen takes place in accordance with the following equation:

$$2Na_2SO_3 + O_2 \rightarrow 2Na_2SO_4$$

Therefore, it is preferable that 8 mg/liter or more of sodium sulfite is added per 1 mg/liter of oxygen dissolved in water. The reaction of succinic acid and oxygen takes place in accordance with the following equation:

$$2HOOCCH_2CH_2COOH + 3O_2 \rightarrow 2HOOCCH_2COOH + 2CO_2 + 2H_2O$$

Therefore, it is preferable that 2.5 mg/liter or more of succinic acid is added per 1 mg/liter of oxygen dissolved in water.

The form of the agent for treating boiler water is not particularly limited. For example, the agent may be a single liquid agent in which the copolymer of (meth)acrylic acid and 2-acrylamido-2-methylpropanesulfonic acid and the oxygen scavenger are both dissolved. The agent may also be composed of two liquid parts which are a solution containing the copolymer of (meth)acrylic acid and 2-acrylamido-2-methylpropanesulfonic acid and a solution containing the oxygen scavenger. Alternatively, the agent may be composed of two powder parts which are powder of the copolymer of (meth)acrylic acid and 2-acrylamido-2-methylpropanesulfonic acid and powder of the oxygen scavenger. The agent may also be composed of one liquid part and one powder part, wherein either one of the copolymer and the oxygen scavenger is in the form of a solution and the other component is in the form of powder.

The agent for treating boiler water can be used in combination with other agents. The agents used in combination are not particularly limited and other scale inhibitors and corrosion inhibitors can be used. Examples of the other scale inhibitor include polymers and copolymers of compounds such as (meth)acrylic acid, maleic acid, itaconic acid, hydroxyethyl methacrylate, acrylamide, vinylsulfonic acid, styrenesulfonic acid and 2-hydroxy-3-allyloxypropanesulfonic acid. Examples of the corrosion inhibitor include phosphates such as trisodium phosphate and disodium hydrogenphosphate and polyphosphates such as sodium hexametaphosphate.

The boiler to which the agent for treating boiler water of the present invention is applied is not particularly limited. When the temperature of water exceeds 250°C, there is the possibility that the copolymer of (meth)acrylic acid and 2-acrylamido-2-methylpropanesulfonic acid is decomposed. Therefore, it is preferable that the agent is applied to a low pressure boiler which is operated at a pressure of 3.0 MPa or less.

The mechanism according to which generation of smell and formation of acetaldehyde in steam can be suppressed by the agent for treating boiler water of the present invention is considered as follows. When oxygen is present in water in a condition of a high temperature and a high pressure, oxygen attacks a polymer to react with the polymer and a portion of the polymer is decomposed to form amines and acetaldehyde. Although the amount of amines formed is small, amines generally have low threshold values of smelling and tend to cause the problem of smell. The attack of oxygen to the polymer can be suppressed by the addition of the oxygen scavenger. When the molecular weight of the polymer is excessively small, the concentration of acetaldehyde increases because the ends of the polymer tend to be decomposed by the attacked by oxygen.

When using the process for the treatment of boiler water of the present invention, an excellent effect of preventing scale formation can be exhibited by the effect of the copolymer containing 2-acrylamido-2-methylpropanesulfonic acid and, at the same time, the degree of smell and the concentration of acetaldehyde can be kept at the same levels as those obtained by using polyacrylic acid. The process for the treatment of water of the present invention can be particularly effectively used for decreasing smell in a system in which drain of steam is recovered.

To summarise the advantages obtained by the present invention, the process for the treatment of boiler water of the present invention can provide steam having little smell and a small concentration of acetaldehyde and showing high safety although the agent contains the polymer derived form 2-acrylamido-2-methylpropanesulfonic acid.

EXAMPLES

The present invention is described more specifically with reference to examples. However, the present invention is not limited to the examples.

In Examples and Comparative Examples, the tests were conducted using the test apparatus for simulating a boiler system shown in Figure 1. The amount of recovery of drain in an actual boiler is generally 0 to 70%. However, the entire drain was recovered and recycled in this apparatus. The smell components and acetaldehyde formed by decomposition of the copolymer were not discharged to the outside but accumulated and concentrated in the system.

From a storage tank 1 having a volume of 20 liters, boiler water was transferred to a simulated boiler 2 at the flow speed of 5.55 liters/hr. The simulated boiler was operated at the pressure of 2.0 MPa and the amount of blow of 0.55 liters/hour. Formed steam is converted to drain in a heat exchanger 3 and the drain was returned to the storage tank through a flow meter 4 at a flow speed of 5.00 liters/hr. A sampling valve 5 is disposed at the piping for the drain and a portion of the drain was taken out as a sample. To the storage tank, water containing the agent for treating boiler water is added as the supplement at the speed of 0.55 liters/hr.

In Examples and Comparative Examples, the degree of smell and the concentration of acetaldehyde were measured in accordance with the following methods:

(1) Degree of smell

After a Tedlar® Bag having a volume of 5 liters was filled with dry air, 0.5 ml of drain was injected into the pack using a syringe. The hole made by the syringe was closed with a tape and the pack was left standing at room temperature for 3 days. After it was confirmed that the drain had completely vaporized, the degree of smell was evaluated by the organoleptic test.

(2) Concentration of acetaldehyde

The concentration of acetaldehyde was measured in accordance with the head space GC-MS method using $CD_3CDO$.

Example 1

To softened water having the concentration of dissolved oxygen of 6 mg/liter, 100 mg/liter of a copolymer of acrylic acid and 2-acrylamido-2-methylpropanesulfonic acid (ratio by mol, 80/20, molecular weight, 13,000), 60 mg/liter of sodium sulfite and 10 mg/liter of sodium hydroxide were added to prepare test water and a test run was conducted using the prepared test water.

A sample was taken out from drain after a continuous operation for 40 hours and the degree of smell and the concentration of acetaldehyde were measured. The degree of smell was 32 and no acetaldehyde was detected.

Example 2

A test run was conducted in accordance with the same procedures as those conducted in Example 1 expect that a copolymer of acrylic acid and 2-acrylamido-2-methylpropanesulfonic acid (ratio by mol, 70/30; molecular weight, 13,000) was used in place of the copolymer of acrylic acid and 2- acrylamido-2-methylpropanesulfonic acid (ratio by mol, 80/20; molecular weight, 13,000). The degree of smell was 250 and no acetaldehyde was detected.

Example 3

A test run was conducted in accordance with the same procedures as those conducted in Example 1 expect that a copolymer of acrylic acid and 2-acrylamido-2-methylpropanesulfonic acid (ratio by mol, 60/40; molecular weight, 13,000) was used in place of the copolymer of acrylic acid and 2-acrylamido-2-methylpropanesulfonic acid (ratio by mol, 80/20; molecular weight, 13,000). The degree of smell was 800. Slight smell was felt in the drain but the degree of the smell was not in the range causing any problem. No acetaldehyde was detected.

Comparative Example 1

A test run was conducted using test water to which sodium sulfite was not added. Specifically, to softened water having the concentration of dissolved oxygen of 6 mg/liter, 100 mg/liter of a copolymer of acrylic acid and 2-acrylamido-2-methylpropanesulfonic acid (ratio by mol, 80/20; molecular weight, 13,000) and 10 mg/liter of sodium hydroxide were added to prepare test water and a test run was conducted using the prepared test water in accordance with the same procedures as those conducted in Example 1.

A sample was taken out from drain after a continuous operation for 40 hours and the degree of smell and the concentration of acetaldehyde were measured. The degree of smell was 5,500 and the concentration of acetaldehyde was 6.0 mg/liter.

The result of Examples 1 to 3 and Comparative Example 1 are shown in Table 1.

Table 1

| | copolymer [1] | | sodium sulfite (mg/liter) | sodium hydroxide (mg/liter) | degree of smell | concn. of acetaldehyde (mg/liter) |
|---|---|---|---|---|---|---|
| | amount (mg/ liter) | AMPS [2] (% by mol) | | | | |
| Example 1 | 100 | 20 | 60 | 10 | 32 | not detected |
| Example 2 | 100 | 30 | 60 | 10 | 250 | not detected |
| Example 3 | 100 | 40 | 60 | 10 | 800 | not detected |
| Comparative Example 1 | 100 | 20 | 0 | 10 | 5500 | 6.0 |

1) A copolymer of acrylic acid and 2-acrylamido-2-methylpropanesulfonic acid

2) 2-Acrylamido-2-methylpropanesulfonic acid

As shown by the results in Table 1, the degree of smell in drain was low and no acetaldehyde was detected in Examples 1 to 3 in which the copolymer of acrylic acid and 2-acrylamido-2-methylpropanesulfonic acid and sodium sulfite were added. Thus, it was shown that steam having a high level of safety was supplied. When the content of the unit of 2-acrylamido-2-methylpropanesulfonic acid in the copolymer is in the range of 20 to 40% by mol, the smaller the content of the unit of 2-acrylamido-2-methylpropanesulfonic acid, the lower the degree of smell. In contrast, in Comparative Example 1 in which the copolymer of acrylic acid and 2-acrylamido-2-methylpropanesulfonic acid alone was added and sodium sulfite was not added, the degree of smell and the concentration of acetaldehyde were both large and it was shown that impurities were contained in the steam.

Example 4

The effect of the molecular weight of the copolymer of acrylic acid and 2-acrylamido-2-methylpropanesulfonic acid on the concentration of acetaldehyde in drain was examined.

Into pure water having the concentration of dissolved oxygen of 7.5 to 8.5 mg/liter, 1,000 mg/liter of a copolymer of acrylic acid and 2-acrylamido-2-methylpropanesulfonic acid (ratio by mol, 80/20), 200 mg/liter of sodium sulfite, 74 mg/liter of sodium sulfate and 82 mg/liter of sodium chloride were dissolved. The prepared solution in an amount of one liter was adjusted to a pH of 11.8 with sodium hydroxide and transferred to a 1.5 liter autoclave. The autoclave was closed, heated and kept at 213 °C (a pressure of 2.0 MPa) for 24 hours. Then, 50 ml of a sample was taken out and the concentration of acetaldehyde in the sample was measured.

When the molecular weight of the copolymer was 3,000, the concentration of acetaldehyde was 35 mg/liter. When the molecular weight of the copolymer was 8,200, the concentration of acetaldehyde was 2.8 mg/liter. When the molecular weight of the copolymer was 9,700, the concentration of acetaldehyde was 0.5 mg/liter. When the molecular weight of the copolymer was 12,000 13,000 and 14,000, the concentration of acetaldehyde was 0.1 mg/liter or lower in all cases.

The results obtained in Example 4 are shown in Table 2.

Table 2

| molecular weight | concentration of acetaldehyde |
|---|---|
| 3000 | 35 |
| 8200 | 2.8 |
| 9700 | 0.5 |
| 12000 | <0.1 |
| 13000 | <0.1 |
| 14000 | <0.1 |

As shown by the results in Table 2, the larger the molecular weight of the copolymer of acrylic acid and 2-acrylamido-2-methylpropanesulfonic acid, the larger the effect to decrease the concentration of acetaldehyde. When the molecular weight exceeds 10,000, the concentration of acetaldehyde decreased to hardly detectable levels.

## Claims

1. A process for the treatment of boiler water comprising, adding an agent for treating boiler water comprising a copolymer of (meth)acrylic acid and 2-acrylamido-2-methylpropanesulfonic acid, wherein the copolymer has a molecular weight of 10,000 to 20,000 and wherein the ratio by mol of units of (meth)acrylic acid to units of 2-acrylamido-2-methylpropanesulfonic acid, which are both constituting units of the copolymer, is 70/30 to 90/10, and an oxygen scavenger, to water in a boiler in such an amount, that the concentration of the copolymer of (meth)acrylic acid and 2-acrylamido-2-methylpropanesulfonic acid is 10 to 200 mg/liter.

2. A process for the treatment of boiler water according to claim 1, further comprising, adding the agent for treating boiler water to water in a boiler in such an amount, that the concentration of the oxygen scavenger is equivalent to or more than the amount of oxygen dissolved in the water supplied to the boiler.

3. Use of an agent for treating boiler water comprising a copolymer of (meth)acrylic acid and 2-acrylamido-2-methylpropanesulfonic acid, wherein the copolymer has a molecular weight of 10,000 to 20,000 and wherein the ratio by mol of units of (meth)acrylic acid to units of 2-acrylamido-2-methylpropanesulfonic acid, which are both constituting units of the copolymer, is 70/30 to 90/10 and an oxygen scavenger for the treatment of boiler water in a concentration of the copolymer of (meth)acrylic acid and 2-acrylamido-2-methylpropanesulfonic acid of 10 to 200 mg/liter.

## Patentansprüche

1. Verfahren zur Behandlung von Kesselwasser, umfassend, Hinzufügen eines Mittels zur Behandlung von Kesselwasser, umfassend ein Copolymer von (Meth)acrylsäure und 2-Acrylamido-2-methylpropansulfonsäure, wobei das Copolymer ein Molekulargewicht von 10.000 bis 20.000 aufweist und wobei das Verhältnis in Mol von Einheiten von (Meth)acrylsäure zu Einheiten von 2-Acrylamido-2-methylpropansulfonsäure, die beide konstituierende Einheiten des Copolymers sind, 70/30 zu 90/10 ist und einen Sauerstoff-Radikalfänger, zu Wasser in einem Boiler in solch einer Menge, daß die Konzentration des Copolymers von (Meth)acrylsäure und 2-Acrylamido-2-methylpropansulfonsäure 10 bis 200 mg/Liter ist.

2. Verfahren zur Behandlung von Kesselwasser nach Anspruch 1, weiterhin umfassend, Hinzufügen des Mittels zur Behandlung von Kesselwasser zu Wasser in einem Kessel in solch einer Menge, daß die Konzentration des Sauerstoff-Radikalfängers äquivalent zu oder mehr als die Menge von in dem Wasser gelösten Sauerstoff ist, das zu dem Kessel hinzugeführt wird.

3. Verwendung eines Mittels zur Behandlung von Kesselwasser, umfassend ein Copolymer von (Meth)acrylsäure und 2-Acrylamido-2-methylpropansulfonsäure, wobei das Copolymer ein Molekulargewicht von 10.000 bis 20.000 aufweist und wobei das Verhältnis in Mol von Einheiten von (Meth)acrylsäure zu Einheiten von 2-Acrylamido-2-methylpropansulfonsäure, die beide konstituierende Einheiten des Copolymers sind, 70/30 bis 90/10 ist und einen Sauerstoff-Radikalfänger, zur Behandlung von Kesselwasser in einer Konzentration des Copolymers von (Meth)acrylsäure und 2-Acrylamido-2-methylpropansulfonsäure von 10 bis 200 mg/Liter.

## Revendications

1. Procédé de traitement de l'eau de chaudière comprenant l'addition d'un agent de traitement de l'eau de chaudière comprenant un copolymère d'acide (méth)acrylique et d'acide 2-acrylamido-2-méthylpropanesulfonique, dans lequel le copolymère a une masse moléculaire de 10 000 à 20 000 et dans lequel le rapport en moles des motifs d'acide (méth)acrylique aux motifs d'acide 2-acrylamido-2-méthylpropane-sulfonique, qui sont tous deux des motifs constitutifs du copolymère, est de 70/30 à 90/10, et un piège à oxygène, à de l'eau dans une chaudière en une quantité telle que la concentration en copolymère d'acide (méth)acrylique et d'acide 2-acrylamido-2-méthylpropanesulfonique est de 10 à 200 mg/litre.

2. Procédé de traitement de l'eau de chaudière selon la revendication 1, comprenant en outre l'addition de l'agent de traitement de l'eau de chaudière à de l'eau dans une chaudière en une quantité telle que la concentration en piège à oxygène est supérieure ou égale à la quantité d'oxygène dissous dans l'eau alimentée dans la chaudière.

3. Utilisation d'un agent de traitement de l'eau de chaudière comprenant un copolymère d'acide (méth)acrylique et d'acide 2-acrylamido-2-méthylpropane sulfonique, dans lequel le copolymère a une masse moléculaire de 10 000 à 20 000 et dans lequel le rapport en moles des motifs d'acide (méth)acrylique aux motifs d'acide 2-acrylamido-2-méthylpropane sulfonique, qui sont tous deux des motifs constitutifs du copolymère, est de 70/30 à 90/10, et un piège à oxygène pour le traitement de l'eau de chaudière en une concentration en copolymère d'acide (méth) acrylique et d'acide 2-acrylamido-2-méthylpropanesulfonique de 10 à 200 mg/litre.

# Fig. 1